Europäisches Patentamt

European Patent Office

Office européen des brevets

(19)

(11) Veröffentlichungsnummer: **0 444 494 B1**

(12) **EUROPÄISCHE PATENTSCHRIFT**

(45) Veröffentlichungstag der Patentschrift: **15.11.95**

(51) Int. Cl.⁶: **C04B 41/50**, B01J 37/02, B22F 3/26

(21) Anmeldenummer: **91102248.1**

(22) Anmeldetag: **18.02.91**

(54) **Verfahren zum Belegen von Keramikwabenkörpern mit feinteiligen Feststoffen.**

(30) Priorität: **28.02.90 DE 4006205**
**15.12.90 DE 4040150**

(43) Veröffentlichungstag der Anmeldung:
**04.09.91 Patentblatt 91/36**

(45) Bekanntmachung des Hinweises auf die
Patenterteilung:
**15.11.95 Patentblatt 95/46**

(84) Benannte Vertragsstaaten:
**AT BE CH DE ES FR GB GR IT LI NL SE**

(56) Entgegenhaltungen:
EP-A- 0 154 295      EP-A- 0 398 128
WO-A-89/11342       US-A- 3 873 350
US-A- 4 039 482      US-A- 4 609 563

(73) Patentinhaber: **Degussa Aktiengesellschaft**
**Weissfrauenstrasse 9**
**D-60311 Frankturt (DE)**

(72) Erfinder: **Schmidt, Felix, Dr.**
**Maurice Sadorge 11**
**W-7888 Rheinfelden (DE)**
Erfinder: **Baumgartner, Wilfried**
**Schmiederain 8**
**W-7888 Rheinfelden (DE)**
Erfinder: **Manner, Reinhard, Dr.**
**Bonhoefferstrasse 17**
**W-6457 Maintal 1 (DE)**
Erfinder: **Birtigh, Gerhard**
**Jenaer Strasse 9**
**W-6369 Nidderau (DE)**
Erfinder: **Dittrich, Ewald**
**Albert Schweitzer-Strasse 87**
**W-6451 Grosskrotzenburg (DE)**

**Beschreibung**

Die Erfindung betrifft ein Verfahren zur gleichmäßigen Belegung eines Wabenkörpers aus Keramik oder Metall mit einer Menge des Feststoffs einer Beschichtungsdispersion, welche bei einer gegebenen konstanten Dichte der Beschichtungsdispersion unterhalb derjenigen liegt, welche im Gleichgewicht zwischen Wabenkörper und Beschichtungsdispersion zustandekommt.

Beim Beschichten von porösen keramischen Trägern des Monolithtyps mit feinteiligen Oxiden, z. B. aktivem $Al_2O_3$ zur Erhöhung der Oberfläche einer aufzubringenden katalytisch aktiven Komponente wurden die Träger bisher bis zur völligen Füllung der Zellen in eine wäßrige Dispersion des Oxids getaucht oder mit der Dispersion durchflutet. Dann wurde die in den Zellen verbleibende überschüssige Dispersion durch Ausblasen oder Absaugen entfernt (Ullmanns Encyklopädie der techn. Chemie, 3. Auflage, 9. Band, (1957), S. 273, 274). Dabei kamen stets Beschichtungen entsprechend der vollständigen Absättigung des Wasserporenvolumens des jeweiligen Keramikträgers zustande. Das bekannte Verfahren erlaubt nur die Verwendung relativ niedrigkonzentrierter, d. h. dünnflüssiger Oxiddispersionen, so daß eine mehrfache Beschichtung mit Zwischentrocknen erforderlich ist, um eine anwendungsgerechte Oxidmenge aufzubringen. Die im Einzelfall je Träger aufziehende Oxidmenge ist strikt an die Porosität bzw. Saugfähigkeit des Trägers gebunden, so daß in einer Vielzahl von Trägern die resultierenden Beladungsmengen stark schwanken. Hinzu kommt, daß der Tauchvorgang so langsam ausgeführt werden muß, daß es nicht zu einer Überflutung der beim Tauchen oben liegenden Stirnfläche und damit zu Lufteinschlüssen im monolithischen Wabenkörper kommt, bevor die aufsteigende Flüssigkeitssäule der Dispersion diese Stirnfläche erreicht. Ist dies nämlich nicht der Fall, verbleiben unbeschichtete Bereiche im monolithischen Wabenkörper.

Ein in DE-AS 25 26 489 beschriebenes, technisch recht aufwendiges Verfahren umgeht die Poblematik des einfachen Tauchens eines monolithischen Wabenkörpers durch Einbringen des Wabenkörpers in eine druckfeste Kammer, Evakuieren dieser Kammer und des in ihr befindlichen Wabenkörpers bzw. dessen Poren, Fluten der Kammer mit der Dispersion und Aufbau eines Überdrucks in der Kammer zur Einpressung der Dispersion in die Poren sowie anschließendes Entfernen der in den Zellen des monolithischen Wabenkörpers verbleibenden überschüssigen Dispersion.

Eine Lehre zur gleichmäßigen Aufbringung gewünschter Feststoffmengen wird in genannter Schrift nicht geltend gemacht.

Der Erfindung liegt die Aufgabe zugrunde, diese Nachteile zu überwinden und ein Beschichtungsverfahren zu schaffen, mit dem eine gewünschte Beschichtungsmenge in gleichmäßiger Verteilung, unabhängig von einer gegebenen Saugfähigkeit eines porösen Keramikträgers oder einer gegebenen Adsorptionswirkung eines Metallträgers, aufgebracht und die Streuung der Beladungsmengen innerhalb einer Trägerserie vermindert werden kann.

Diese Aufgabe wird gelöst durch ein Verfahren zum gleichmäßigen Beschichten eines Wabenkörpers aus Keramik oder Metall mit einer Menge des Feststoffs einer Beschichtungsdispersion, welche bei einer gegebenen konstanten Dichte der Beschichtungsdispersion unterhalb derjenigen Feststoffmenge liegt, welche sich im Gleichgewicht zwischen Wabenkörper und Beschichtungsdispersion auf dem Wabenkörper abscheidet. Das Verfahren ist dadurch gekennzeichnet, daß man den Wabenkörper in eine formgleiche, innen mit mindestens einer aufblasbaren Dichtung versehene vertikale Tauchkammer einbringt, die Abdichtung herstellt und in die Tauchkammer innerhalb einer Füllzeit die Dispersion von unten bis zum Erreichen einer Füllmenge einpumpt, die Dispersion nach einer Haltezeit innerhalb einer Auspumpzeit wieder auspumpt und den Wabenkörper nach Lösen der Dichtung(en) und Entnahme aus der Tauchkammer durch Ausblasen oder Absaugen von überschüssiger Dispersion befreit.

Die Füllzeit, die Füllmenge, die Haltezeit im gefluteten Zustand und die Auspumpgeschwindigkeit sowie die Zeit zwischen Auspumpen und Ausblasen oder Absaugen werden nach der aufzunehmenden Feststoffmenge derart bemessen, daß zur Anhebung der Festoffmenge die Füllzeit, die Haltezeit, die Auspumpzeit und die Zeit zwischen Auspumpen und Ausblasen oder Absaugen erhöht, aber die Füllmenge erniedrigt wird, wobei diese Maßnahme einzeln oder in beliebiger Kombination anwendbar sind.

Steuerungsmöglichkeiten für die Feststoffmengen-Aufnahme bestehen also über folgende Variablen im Beschichtungsablauf:

a) Füllgeschwindigkeit/Füllzeit

b) Füllmenge

c) Haltezeit

d) Entleerung (Geschwindigkeit und Zeit)

e) Zeit zwischen Auspumpen und Ausblasen

Dabei zeigen die einzelnen Maßnahmen unterschiedliche Einflußgrößen:

a) <u>Füllgeschwindigkeit und Füllzeit</u> Bei sehr geringen Füllgeschwindigkeiten, d. h. sehr langen Füllzeiten wird die Feststoffmengenverteilung in Kanalrichtung schlecht. Es entsteht eine Schrägverteilung mit aufsteigender Feststoffkonzentration von der Einströmseite bis zur Austrittsseite. Dies wird darauf zurückgeführt, daß die einströmende Dispersion im unteren Bereich einen Spüleffekt erzeugt, der bei gleichzeitiger

Aufkonzentrierung der Dispersion nach oben abnimmt. Wichtig ist daher, daß der Wabenkörper rasch gefüllt wird, so daß die Saugwirkung über die ganze Kanalfläche praktisch gleichzeitig einsetzt.

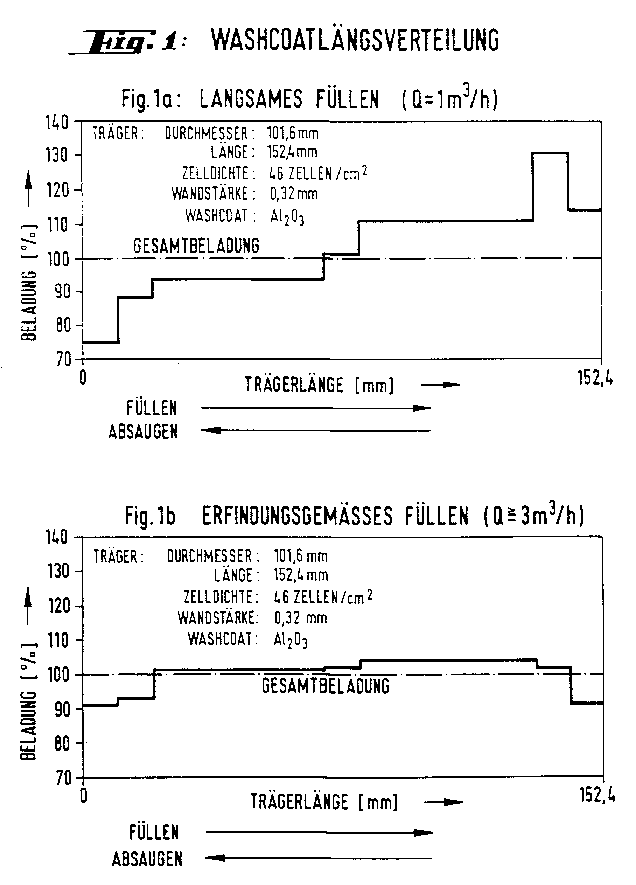

Fig. 1 zeigt die Feststoffmengenverteilung bei langsamem und schnellem Füllen.

Bei Beschichtung unterschiedlicher Trägergrößen sind Pumpenleistung und Füllklappenöffnung entsprechend anzupassen. Es wurde gefunden, daß eine Füllzeit von 4 - 5 sec pro 152,4 mm langem Teil günstig ist.

b) <u>Füllmenge</u> Die Füllmenge kann über Füllzeit bzw. Füllstandmessung geregelt werden. Davon ist die Füllstandmessung die bessere Methode, da im wesentlichen immer die gleiche Dispersionsmenge in die zu beschichtende Wabe gepumpt wird. Die Tauchkammer wird am besten so eingerichtet, daß die obere Stirnfläche der Wabe immer gleich hoch in der Kammer sitzt und gleich hoch überflutet wird. Es hat sich gezeigt, daß beim Pumpen unterschiedlicher Mengen Dispersion (ausgedrückt über Füllzeit) durch gleichgroße Waben ungleiche Feststoff-Beladungen auftreten. Dies belegt nachstehender <u>Versuch 1</u>.

<u>Versuch 1:</u>

Es wurden 6 Monolithträger ein und desselben Herstellungslots aus Cordierit mit den Abmessungen:

144,8 x 81,3 x 127 mm

62 Kanäle/cm$^2$

0,2 mm Wandstärke

bei steigenden Füllzeiten mit einer $\gamma$-Al$_2$O$_3$-Dispersion beschichtet und die Feststoffaufnahme ermittelt. Die Beschichtung erfolgte unter folgenden Einstellungen:

| $\gamma$-Al$_2$O$_3$-Dispersion: | Dichte 1,568 kg/dm$^3$<br>Visk. 40 - 42 cp<br>Temp. 22,5 °C |
|---|---|
| Haltezeit:<br>Abpumpzeit:<br>Ende Abpumpen bis Beginn Ausblasen:<br>Dauer Beschichtungszyklus:<br>Ausblasdruck: | 0,5 sec<br>8,0 sec<br>4,0 sec<br>20,0 sec<br>150,140,130 mbar / Temp.45° C |

| Träger- gewicht | Gew. nach Aus- blasen | BD Naß- auf- nahme | Trocken- gewicht | Trocken- auf- nahme | Füll- zeit | Feststoff aufge- nommen |
|---|---|---|---|---|---|---|
| g | g | g | g | g | sec | % |
| 569 | 952 | 383 | 754 | 185 | 6,7 | 48,30 |
| 569 | 954 | 385 | 755 | 186 | 6,7 | 48,31 |
| 541 | 916 | 375 | 721 | 180 | 7,7 | 48,00 |
| 544 | 913 | 369 | 721 | 177 | 7,7 | 47,97 |
| 543 | 882 | 339 | 703 | 160 | 8,7 | 47,20 |
| 543 | 878 | 335 | 701 | 158 | 8,7 | 47,16 |

Wie die Tabelle zeigt, nimmt die Feststoff-Aufnahme bei Vergrößerung der Füllmengen (ausgedrückt durch Verlängerung der Füllzeit bei gleicher Pumpenleistung) ab und das Verhältnis zwischen aufgenommenem Feststoff und aufgenommenem Wasser verschiebt sich zu Gunsten des Wassers.

c) Haltezeit

Als Haltezeit gilt die Zeit zwischen dem Ende des Füllens und dem Beginn des Auspumpens. Der Wabenkörper steht während dieser Zeit voll mit Beschichtungsdispersion und saugt weiter Wasser aus der Dispersion an. Die direkt an der Kanalwand anliegende Schicht erhält dadurch eine hohe Feststoffkonzentration.

Mit Abnahme des Saugvermögens des Wabenkörpermaterials sinkt auch der Einfluß der Haltezeit. Diese ist damit dem Wabenkörpermaterial und den Kanalwandstärken anzupassen.

Versuch 2:

Träger und sonstige Einstellungen entsprechen Versuch 1 (Füllzeit; 6,7 sec)

| Träger-gewicht | Gew. nach Aus-blasen | BD Naß-auf-nahme | Trocken-gewicht | BD Trocken-auf-nahme | Halte-zeit | Feststoff-aufge-nommen |
|---|---|---|---|---|---|---|
| g | g | g | g | g | sec | % |
| 550 | 940 | 390 | 735 | 185 | 0,5 | 47,44 |
| 550 | 942 | 392 | 736 | 186 | 0,5 | 47,45 |
| 550 | 955 | 405 | 742 | 192 | 1,0 | 47,41 |
| 550 | 957 | 407 | 743 | 193 | 1,0 | 47,42 |
| 550 | 970 | 420 | 748 | 198 | 2,0 | 47,14 |
| 550 | 967 | 417 | 747 | 197 | 2,0 | 47,24 |

Das vom Wabenkörper aufgenommene Feststoff/Wasser-System wird durch die Haltezeitverlängerung zugunsten des Wassers verschoben. Naß- und Trockenaufnahme steigen aber doch merklich an.

d) Auspumpen (Geschwindigkeit und Zeit)

Die Entleerung der Wabenkörper durch Auspumpen nach abgelaufener Haltezeit hat ebenfalls einen Einfluß auf die aufgenommene Washcoatmenge. Sie ist abhängig von Pumpenleistung und Pumpzeit.

Im nachstehenden Versuch wurde die Auspumpzeit stufenweise verlängert, was mit einer besseren Entleerung der Kanäle einhergeht. Das immer noch wirkende Saugvermögen fixierte den abgeschiedenen Überzug besser auf den Kanalwänden des Wabenkörpers.

Versuch 3:

Einstellung und Träger wie bei Versuch 1 (Füllzeit 6,7 sec)

| Träger-gewicht | Gew. nach Aus-blasen | BD Naß-auf-nahme | Trocken-gewicht | BD Trocken-auf-nahme | Aus-pump-zeit | Feststoff aufge-nommen |
|---|---|---|---|---|---|---|
| g | g | g | g | g | sec | % |
| 573 | 956 | 383 | 753 | 180 | 8,0 | 47,00 |
| 573 | 959 | 386 | 744 | 171 | 8,0 | 44,30 |
| 557 | 937 | 380 | 738 | 181 | 9,0 | 47,63 |
| 558 | 950 | 392 | 744 | 186 | 9,0 | 47,45 |
| 573 | 968 | 395 | 701 | 188 | 10,0 | 47,60 |
| 575 | 990 | 415 | 775 | 200 | 10,0 | 48,19 |

e) Zeit zwischen Auspumpen und Ausblasen

Die Zeit zwischen Auspumpen und dem anschließenden Freiblasen bzw. Freisaugen geht ebenfalls in die Feststoffaufnahme ein, dies um so mehr, wenn die vorhergehenden Schritte sehr schnell durchgeführt werden und die Sättigung durch Wasseraufnahme noch deutlich unterschritten ist.

Der Einfluß wurde im Versuch 4 untersucht: Träger und Einstellung wie bei Versuch 1 (Füllzeit 6,7 sec)

| Träger- gewicht Aus- blasen g | Gew. nach Naß- auf- nahme g | BD Naß- auf- nahme g | Trocken- gewicht g | BD Trocken- auf- nahme g | Pausen- zeit sec | Feststoff- aufge- nommen % |
|---|---|---|---|---|---|---|
| 570 | 953 | 383 | 753 | 183 | 4,0 | 47,78 |
| 572 | 956 | 384 | 756 | 184 | 4,0 | 47,92 |
| 573 | 952 | 379 | 755 | 182 | 4,0 | 48,02 |
| 573 | 963 | 390 | 760 | 187 | 6,0 | 47,92 |
| 574 | 966 | 392 | 762 | 188 | 6,0 | 47,98 |
| 572 | 957 | 385 | 757 | 185 | 6,0 | 48,03 |
| 571 | 968 | 397 | 762 | 191 | 8,0 | 48,10 |
| 570 | 965 | 395 | 760 | 190 | 8,0 | 48,09 |
| 568 | 967 | 399 | 760 | 192 | 8,0 | 48,08 |

Einen Einfluß hat auch noch die Menge der nach Auspumpen noch in den Kanälen befindlichen Dispersion. Dieser Einfluß ist abhängig von der Auspumpzeit und der installierten Pumpenleistung, (bei Versuch 4 hatte die Entleerpumpe eine theoretische Leistung von 3 m³/h).

Die Erfindung wird nachfolgend anhand der Zeichnung und mit Ausführungsbeispielen weiter erläutert. In der Zeichnung zeigt:

Fig. 1       die Feststoffmengenverteilung
                 a) bei bisher üblichem langsamen Füllen und
                 b) bei raschem Füllen gemäß der Erfindung;

Fig. 2       die zur Ausführung der Erfindung verwendete Apparatur;

Fig. 3       die Washcoat-Längsverteilung, erzielt im Beispiel 1;

Fig. 4       die im Beispiel 2 erzielte radiale Washcoatverteilung;

Fig. 5       die im Beispiel 3 erzielte Oberflächenverteilung des Washcoats;

Fig. 6       die im Beispiel 4 erzielte Washcoat-Längsverteilung;

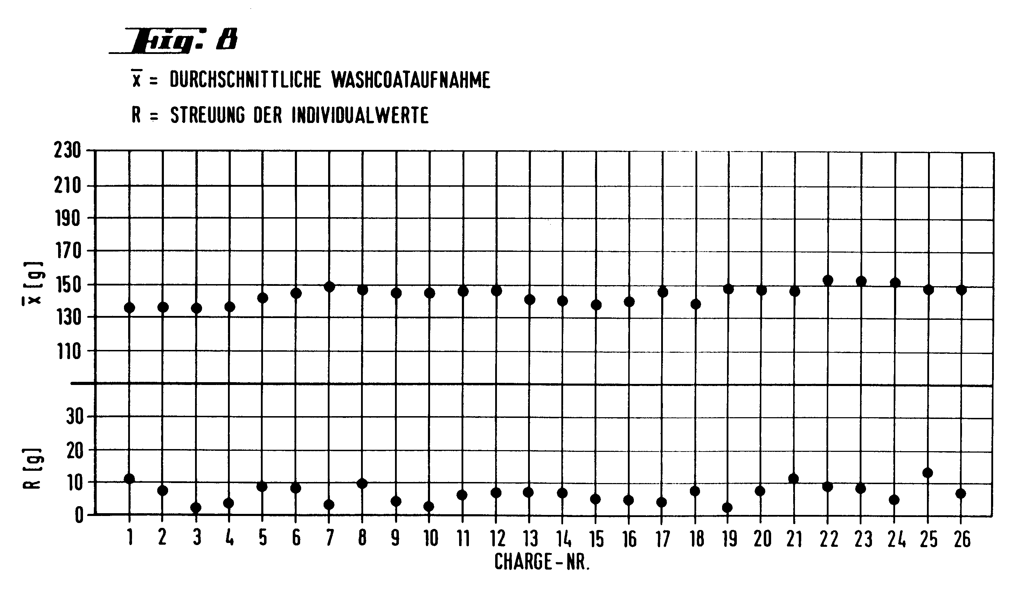

Fig. 7       die im Beispiel 5 bei bisheriger Arbeitsweise erhältlichen Mittelwerte der Washcoataufnahme bei einer größeren Anzahl von Wabenkörpern und

Fig. 8       die im Beispiel 5 bei erfindungsgemäßer Arbeitsweise erhältlichen Mittelwerte der Washcoatverteilung bei einer größeren Anzahl von Wabenkörpern.

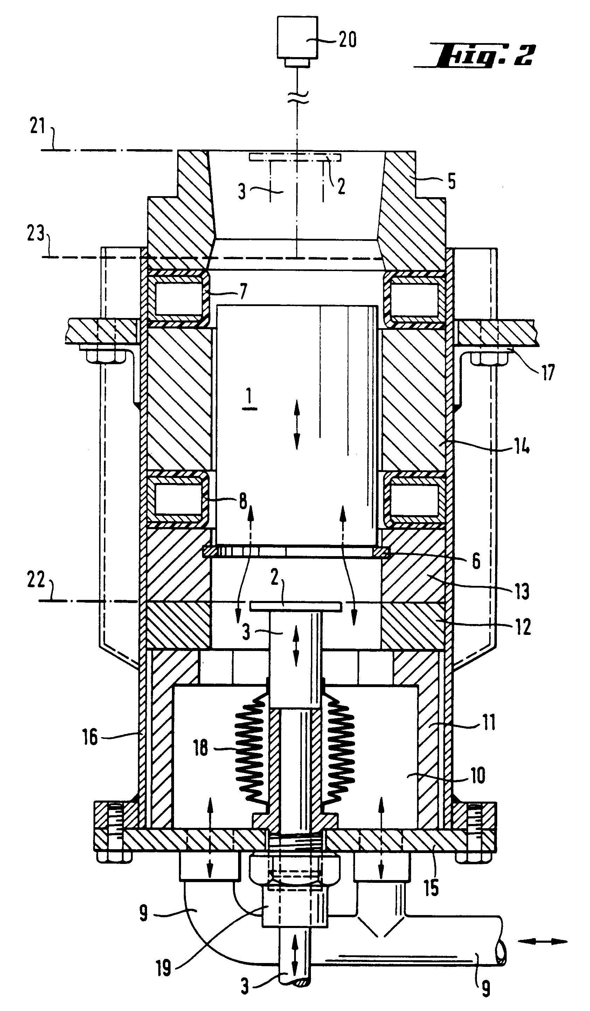

Die im erfindungsgemäßen Belegungsverfahren verwendete Tauchkammer hat gemäß Fig.2 folgenden Aufbau:

Ein rechteckiges, vertikal stehendes Tauchkammergehäuse 16 ist mit einer rechteckigen Bodenplatte 15 von etwas größeren Abmessungen als der Querschnitt des Tauchkammergehäuses verbunden. Die Bodenplatte enthält eine zentrale Bohrung, in das eine mit einem Faltenbalg 18 geschützte Gleithülse 19 zur Aufnahme eines auf- und ab-beweglichen Stempels 3 eingeschraubt ist. Durch die Bodenplatte führen des weiteren Füll- und Entleerungsleitungen 9. Der Stempelschaft trägt an seinem oberen Ende eine Auflageplatte 2 für den Wabenkörper. Ein rechteckiges Innengehäuse 11 mit einem nach innen vorspringenden oberen ringförmigen Rand ist bündig in das Gehäuse eingesetzt und bildet den sog. permanenten unteren Tauchkammereinsatz. Er begrenzt den Vorflutraum 10.

Auf das als Einsatz ausgebildete Innengehäuse 11 können Wechseleinsätze 12, 13, 14 aufgelegt werden. Sie haben die Form von Scheiben von geringfügig größerer Öffnungsweite als der Durchmesser des Wabenkörpers 1, so daß sie quasi die Zylinderwand für den reziprokierenden Wabenkörper abgeben. Scheibenstärke bzw. Zahl der Wechseleinsätze richten sich nach der Länge der jeweils zu beschichtenden Wabenkörper. Die unteren und oberen Abschnitte eines gegebenen Wabenkörpers werden durch die in das dem Tauchkammergehäuse 16 eingelegten aufblasbaren Gummimanschetten 8 und 7, fixiert, wobei die äußere Manschettenform der Tauchkammer und die innere der Trägerform entspricht. Unterhalb 8 ist ein am Wechseleinsatz 13 anliegender Federring als Auflagesteg 6 für den Wabenkörper eingesetzt. Ein oberhalb der Manschette angeordnetes ringförmiges Formstück 5 dient als Tauchkammerkopf 5.

Das Tauchkammergehäuse 16 ist bei 17 an einem Tragegestell aufgehängt. Ein Faltenbalg 18 schützt die Gleitverbindung Stempel 3 / Gleitbüchse 19 vor Eindringen von Beschichtungssuspension.

Eine zentrische, über dem Wabenkörper außerhalb des Tauchkammerkopfs angeordnete Lichtschranke 20 dient zur Messung des Füllniveaus. Die untere Position des Stempels ist durch 22, die obere durch 21 gekennzeichnet. 23 gibt ein mögliches Füllniveau der Tauchkammer an.

Der funktionelle Arbeitsablauf in der Tauchkammer gestaltet sich wie folgt:
- Stempel 3 fährt in die obere Lage 21;
- Träger 1 wird auf die Aufnahmeplatte 2 des Stempels gestellt;
- Stempel fährt in die untere Lage 22,
- Träger bleibt auf dem Auflagesteg 6 stehen;
- obere Manschette 7 und untere Manschette 8 werden aufgeblasen;
- Dispersionszufuhr über Leitung 9 startet mit voller Leistung der Füllpumpe, oder voller Öffnung des Füllventils;
- Füllzeit 1 läuft ab;
- Dispersionszufuhr 9 wird mit gedrosselter Leistung weiterbetrieben;
- Füllzeit 2 läuft ab;
- Lichtschranke 20 schaltet bei Erreichen des Füllniveaus 23 Zufuhr ab;
- Haltezeit läuft ab;
- untere Manschette 8 und obere Manschette 7 werden entspannt und Entleerungspumpe läuft an;
- Entleerzeit 1 läuft ab.
- untere Manschette 8 wird aufgeblasen;
- Entleerzeit 2 läuft ab;
- untere Manschette 8 wird entspannt; obere Manschette 7 wird aufgeblasen;
- Stempel 3 fährt nach oben und schiebt den Wabenkörper 1 mittels Aufnahmeplatte 2 durch die obere Manschette (dabei wird der anhaftende Washcoat auf dem Trägermantel abgestreift);
- Stempel erreicht obere Lage 21;
- obere Manschette 7 wird entspannt;
- Entleerpumpe stellt ab;
- Teil wird entnommen und ausgeblasen oder abgesaugt.

Beispiel 1

Ein keramischer Trägerkörper aus Cordierit (Firma Corning Glass) mit den Abmessungen:

| | |
|---|---|
| Durchmesser: | 101,6 mm |
| Länge: | 152,4 mm |
| Zelldichte: | 42 Zellen pro cm$^2$ |
| Wandstärke: | 0,31 mm |

wurde in einem einzigen Schritt in der Tauchkammer mit Washcoat beschichtet.
Der Washcoat hatte folgende Eingenschaften:

| Konzentration: | 48,7 Gew.% Oxide |
|---|---|
| (Oxid-Zusammensetzung: 84,92 Gew. % $Al_2O_3$, 5,30 Gew.% $CeO_2$, 6,82 Gew.% $ZrO_2$, 2,96 Gew.% $Fe_2O_3$) | |
| Viskosität:<br>Temp.:<br>Korngröße: | 50 cp<br>30 °C<br>∅ 4 - 5 µm |

Einstellung der Tauchkammer:

```
Füllzeit 1: 1,5 sec)          Füll-Klappenstellung 100%
                     ) 4,8 sec
Füllzeit 2: 3,3 sec)          Füll-Klappenstellung  20%


Haltezeit:            0,0 sec

     Entleerzeit 1:              1,5 sec
     Entleerzeit 2:              2,5 sec


     Ausstoßen:                  0,8 sec


     Manschettendruck oben  (7): 2,0 bar
     Manschettendruck unten (8): 4,0 bar


     Zeit bis zum Ausblasen:     2,5 sec


     Ausblasdruck:             150   mbar
     Ausblaszeit:              13    sec
```

Das beschichtete Teil wurde 0,5 h mit einem 150 °C heißen Luftstrom getrocknet und danach 1 h bei 500 °C getempert.

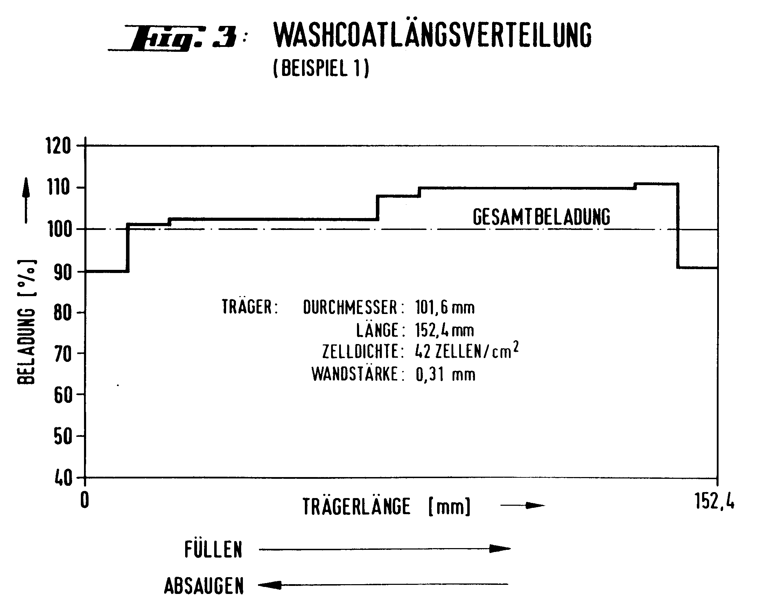

Das Teil hatte nach Temperung eine Beladung von 150 g Washcoat. Die Längsverteilung ist in Figur 3 dargestellt.

Beispiel 2

Ein Metallträger (Firma Behr) mit den Abmessungen:

| Durchmesser: | 90,0 mm |
| Länge: | 74,5 mm |
| Zelldichte: | 62 Zellen /cm$^2$ |
| Wandstärke: | 0,05 mm |

wurde in einem einzigen Schritt in der Tauchkammer mit Washcoat beschichtet.

Der verwendete Washcoat hatte nachstehende Eigenschaften:

Konzentration: 56,3 Gew.% Oxide

(Oxid-Zusammensetzung: 77 Gew.% $Al_2O_3$, 13 Gew.% $CeO_2$, 7 Gew.% $ZrO_2$, 3 Gew.% $Fe_2O_3$)

Einstellung der Tauchkammer:

| Füllzeit 1: | 1,8 sec |
| Füllzeit 2: | 1,2 sec |
| Haltezeit: | 0,0 sec |
| Entleerzeit 1) | |
| | 4,0 sec [*)] |
| Entleerzeit 2) | |
| Ausstoßen: | 0,6 sec |
| Manschettendruck oben (7): | 4,0 bar |
| Manschettendruck unten (8): | 4,0 bar |
| Zeit bis zum Ausblasen: | 1,5 sec |
| Ausblasdruck: | 100 mbar |
| Ausblaszeit: | 8 sec |

[*)]Ein Abstreifen des Mantels vom Washcoat ist bei diesen Teilen nicht notwendig. Die Manschettensteuerung ist gegenüber des Beispiels 1 geändert. Nach Ablauf der Haltezeit bleiben beide Manschetten geschlossen und öffnen gleichzeitig mit Beginn des Ausstoßens.

Das beschichtete Teil wurde stehend im Luftstrom 0,5 h in einem Bandtrockner bei 150 °C getrocknet und danach 0,33 h bei 300 °C getempert.

Die Washcoataufnahme, nach Temperung bestimmt, betrug 82 g.

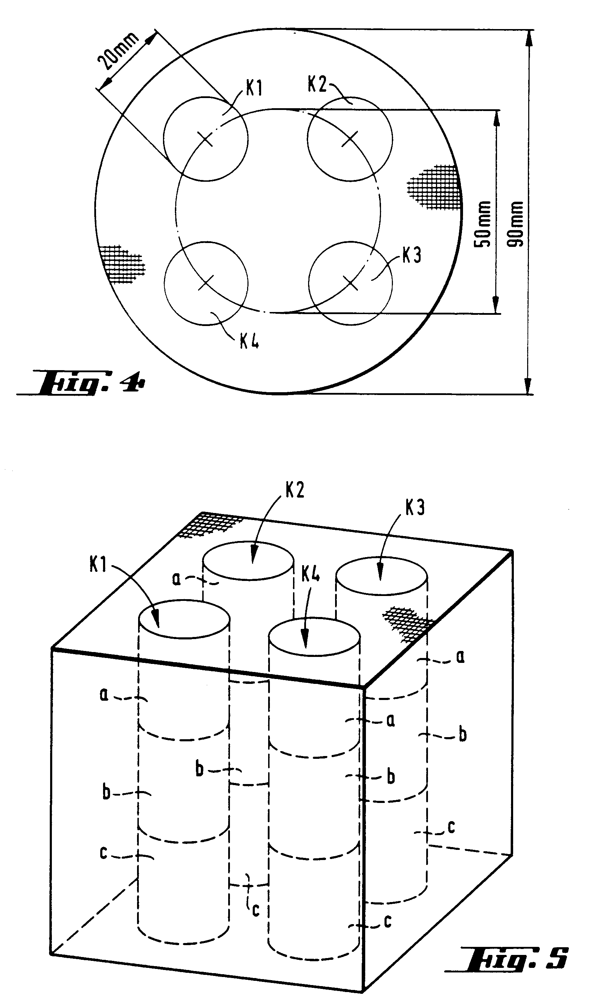

Das Teil war optisch sehr sauber beschichtet, eine Bestimmung der Washcoatverteilung erfolgte nur in radialer Richtung gemäß Zeichnung, Fig. 4.

Beschichtungsergebnis in % der Gesamtbeladung:

| K 1 = | 101,4 % |
| K 2 = | 99,6 % |
| K 3 = | 99,9 % |
| K 4 = | 100,3 % |

Die Gleichverteilung in radialer Richtung ist sehr gut.

Beispiel 3

Ein keramischer Trägerkörper aus Mullit (Firma NGK) mit den Abmessungen:

| | |
|---|---|
| Länge: | 150 mm |
| Breite: | 150 mm |
| Höhe: | 150 mm |
| Zelldichtte: | 8 Zellen/cm$^2$ |
| Wandstärke: | 0,62 mm |

wurde in der Tauchkammer in einem einzigen Schritt mit Washcoat beschichtet.
Der Washcoat hatte folgende Eigenschaften:

| Konzentration: | 64,2 Gew.% Oxide |
|---|---|
| (87 Gew.% Al$_2$O$_3$, 6 Gew.% CeO$_2$ 7 Gew.% ZrO$_2$) | |
| Viskosität: | > 100 cp |
| Temp.: | 30 °C |
| Korngröße: | ⌀ 8 μm |

Einstellung der Tauchkammer:

| | |
|---|---|
| Füllzeit 1: | 4 sec |
| Füllzeit 2: | 6 sec |
| Haltezeit: | 0,5 sec |
| Entleerzeit 1: | 1,5 sec |
| Entleerzeit 2: | 8,0 sec |
| Ausstoßen: | 0,7 sec |
| Manschettendruck oben (7): | 0,8 bar |
| Manschettendruck unten (8): | 1,5 bar |
| Zeit bis zum Ausblasen: | 3,0 sec |
| Ausblasdruck: | 150 mbar |
| Ausblaszeit: | 14 sec |

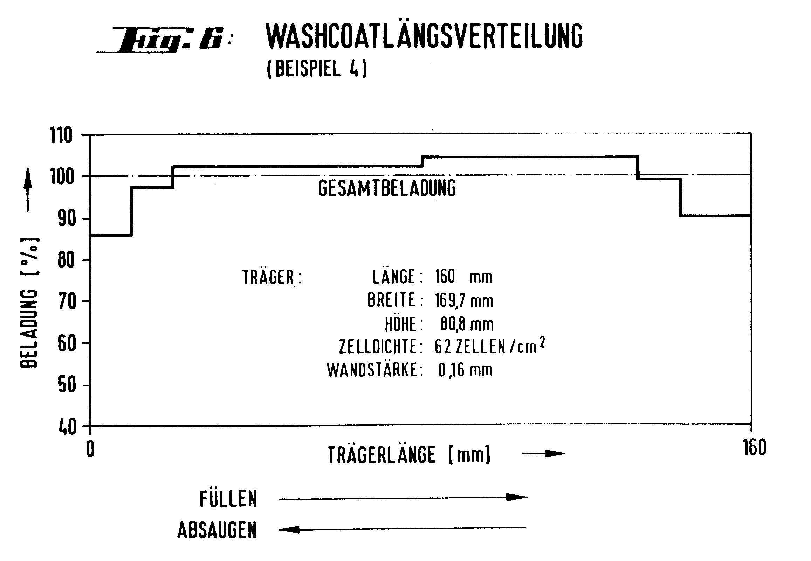

Das beschichtete Teil wurde stehend im Luftstrom 1 h bei 180 °C in einem Brandtrockner getrocknet und anschließend 0,5 h bei 240 °C getempert.
Die Washcoataufnahme, nach der Temperung bestimmt, betrug 402 g.
Die Washcoatverteilung ist in Figur 5 zu sehen; sie ist in allen Richtungen sehr gleichmäßig.
An Kern 1 - Kern 4 gemessene Oberflächen (in m$^2$/g):

|  | **Kern 1** | **Kern 2** | **Kern 3** | **Kern 4** | |
|---|---|---|---|---|---|
| a | 16 | 16 | 16 | 16 | oberes Drittel |
| b | 16 | 17 | 16 | 17 | mittleres " |
| c | 17 | 16 | 17 | 16 | unteres " |

Beispiel 4

Ein keramischer Trägerkörper aus Cordierit (Firma Corning Glass) mit den Abmessungen:

| | |
|---|---|
| Länge: | 160,0 mm |
| Breite: | 169,7 mm |
| Höhe: | 80,8 mm |
| Zelldichte: | 62 Zellen/cm$^2$ |
| Wandstärke: | 0,16 mm |

wurde in der Tauchkammer in einem einzigen Schritt mit Washcoat beschichtet.
Der Washcoat hatte folgende Eigenschaften:
Konzentration: 58,05 Gew.% Oxide
(Oxid-Zusammensetzung 72 Gew.% $Al_2O_3$, 26 Gew.% $CeO_2$, 2 Gew.% $ZrO_2$)

Einstellung der Tauchkammer:

| | |
|---|---|
| Füllzeit 1: | 2,5 sec |
| Füllzeit 2: | 3,0 sec |
| Haltezeit: | 0,0 sec |
| Entleerzeit 1: | 2,0 sec |
| Entleerzeit 2: | 2,0 sec |
| Ausstoßen: | 0,6 sec |
| Manschettendruck oben (7): | 1,0 bar |
| Manschettendruck unten (8): | 3,0 bar |
| Zeit bis zum Absaugen: | 2,5 sec |
| Absaug-Unterdruck: | 400 mbar |
| Absaugzeit 1: | 7,0 sec |
| Pausenzeit: | 3,0 sec |
| Absaugzeit 2: | 9,5 sec |

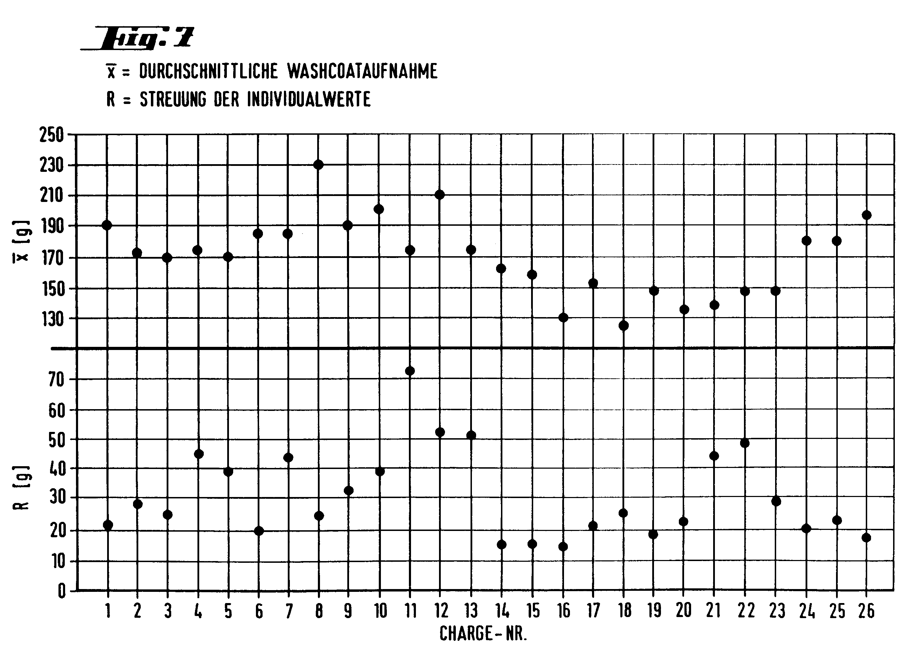

Das abgesaugte Teil wurde stehend im Luftstrom 0,5 h bei 150 °C in einem Bandtrockner getrocknet und danach 1 h bei 500° C getempert.
Die Washcoataufnahme, am getemperten Teil bestimmt, betrug 296 g.
Die Washcoatverteilung in Längsrichtung ist in Figur 6 dargestellt.

Beispiel 5

Es wurde ein Prozeßvergleich mit einer größeren Anzahl keramischer Trägerkörper der Firma Corning Glass durchgeführt:

| | |
|---|---|
| Durchmesser: | 101,6 mm |
| Länge: | 152,4 mm |
| Zelldichte: | 42 Zellen/cm$^2$ |
| Wandstärke: | 0,31 mm |

Die aufgebrachte Oxidbeschichtung hatte folgende Zusammensetzung:

| | |
|---|---|
| $Al_2O_3$ | 86,0 % |
| $CeO_2$ | 6,3 % |
| $ZrO_2$ | 5,4 % |
| $Fe_2O_3$ | 2,3 % |

Pro Teil sollten nominal 154 ± 23 g aufgebracht werden.

```
Mengen und Einstellungen:  herkömmlich    erfindungsgemäß


                                   Figur   7     Figur   8

N            =                     2.600 Stück   2.600 Stück

n            =                       104 Stück     104 Stück

Konz. G %    =                     42,2-43,8     46,76-47,17

Visk. cp     =                        38-42         49-55

Zahl der Tauchschritte =               2             1

Chargengröße:                       100 Stück

Proben je Charge:                     5 Stück
```

Bei den herkömmlichen Mengen und Einstellungen war die Produktion gekennzeichnet durch starke Schwankungen des Mittelwertes der Aufnahme und ebenso große Streuungen der Individualwerte:

$$\text{Prozeßfähigkeit} = \text{cp-Wert} < 1{,}0.$$

Beim erfindungsgemäßen Beschichtungsvorgang ergab sich ein gleichmäßiger Verlauf des Mittelwertes bei geringer Streuung:

$$\text{Gute Prozeßfähigkeit} = \text{cp-Wert} > 2{,}0.$$

cp-Wert

Der Leistungsindex cp stellt eine Verbindung zwischen der Prozeßleistungsfähigkeit und den Spezifikationstoleranzen her.

$$cp = \frac{\text{obere Spezifikationsgrenze} - \text{untere Spezifikationsgrenze}}{6\,\hat{\sigma}}$$

$$cp = \frac{USL - LSL}{6\,\hat{\sigma}}$$

$$\hat{\sigma} = \text{Standardabweichung}$$

| cp-Wert | Interpretation |
|---|---|
| < 1,00 | Dürftig, Prozeß produziert zwangsläufig auch Ausschuß. |
| 1,00 - 1,33 | Gerade noch akzeptabel, verbesserungbesdürftig. |
| 1,34 - 2,00 | Gut, rechtfertigt fortgesetzte Verbesserungsanstrengungen. |
| > 2,00 | Exzellent, langfristig anzustrebendes Ziel. |

## Patentansprüche

1. Verfahren zum gleichmäßigen Beschichten eines Wabenkörpers aus Keramik oder Metall mit einer Menge des Feststoffs einer Beschichtungsdispersion, welche bei einer gegebenen konstanten Dichte der Beschichtungsdispersion unterhalb derjenigen Festoffmenge liegt, welche sich im Gleichgewicht zwischen Wabenkörper und Beschichtungsdispersion auf dem Wabenkörper abscheidet,
   **dadurch gekennzeichnet**,
   daß man den Wabenkörper in eine formgleiche,innen mit mindestens einer aufblasbaren Dichtung versehene vertikale Tauchkammer einbringt, die Abdichtung herstellt und in die Tauchkammer innerhalb einer Füllzeit die Dispersion von unten bis zum Erreichen einer Füllmenge einpumpt, die Dispersion nach einer Haltezeit innerhalb einer Auspumpzeit wieder auspumpt und den Wabenkörper nach Lösen der Dichtung(en) und Entnahme aus der Tauchkammer durch Ausblasen oder Absaugen von überschüssiger Dispersion befreit.

## Claims

1. A method of uniformly coating a ceramic or metal honeycomb member with a quantity of solid from a coating dispersion, the quantity at a given constant density of coating dispersion being below the quantity deposited at equilibrium between the honeycomb members and the coating dispersion, characterised in that the honeycomb member is inserted in a vertical similarly-shaped immersion chamber having at least one inflatable seal, the immersion chamber is sealed, the dispersion is pumped into it from below within a charging time and until charging is complete, the dispersion is pumped out after a holding time and within a pumping-out time, and after breaking the seal or seals the honeycomb member is taken out of the immersion chamber and freed from excess dispersion by blowing out or suction.

## Revendications

1. Procédé pour enduire régulièrement un corps en forme de nid d'abeilles en céramique ou métal avec une quantité de solide d'une dispersion d'enduction, quantité qui pour une densité constante donnée de dispersion d'enduction se situe en dessous de celle, qui correspond à l'équilibre entre le corps en nid d'abeilles et la dispersion d'enduction sur le corps en nid d'abeilles, procédé caractérisé en ce qu'on introduit le corps en nid d'abeille dans une chambre à immersion verticale de même forme munie au moins d'une garniture d'étanchéité qu'on peut gonfler, qu'on réalise l'étanchéité et qu'on introduit par pompage la dispersion dans la chambre d'immersion pendant un temps de remplissage en la faisant arriver par le fond, et après un certain temps de permanence, qu'on la pompe à nouveau pour l'éliminer pendant un temps d'évacuation et qu'on sort le corps en nid d'abeille de la chambre après avoir démonté la (les) garniture(s) et qu'on élimine l'excès de dispersion par soufflage ou aspiration hors de la chambre d'immersion.

## *Fig. 1*: WASHCOATLÄNGSVERTEILUNG

### Fig.1a: LANGSAMES FÜLLEN ($Q \approx 1 m^3/h$)

TRÄGER:
DURCHMESSER: 101,6 mm
LÄNGE: 152,4 mm
ZELLDICHTE: 46 ZELLEN/cm$^2$
WANDSTÄRKE: 0,32 mm
WASHCOAT: $Al_2O_3$

GESAMTBELADUNG

BELADUNG [%]

TRÄGERLÄNGE [mm] ⟶ 152,4

FÜLLEN ⟶
ABSAUGEN ⟵

### Fig.1b ERFINDUNGSGEMÄSSES FÜLLEN ($Q \geqq 3 m^3/h$)

TRÄGER:
DURCHMESSER: 101,6 mm
LÄNGE: 152,4 mm
ZELLDICHTE: 46 ZELLEN/cm$^2$
WANDSTÄRKE: 0,32 mm
WASHCOAT: $Al_2O_3$

GESAMTBELADUNG

BELADUNG [%]

TRÄGERLÄNGE [mm] ⟶ 152,4

FÜLLEN ⟶
ABSAUGEN ⟵

**Fig. 2**

*Fig. 3*: WASHCOATLÄNGSVERTEILUNG
(BEISPIEL 1)

GESAMTBELADUNG

TRÄGER:   DURCHMESSER: 101,6 mm
          LÄNGE: 152,4 mm
          ZELLDICHTE: 62 ZELLEN/cm$^2$
          WANDSTÄRKE: 0,31 mm

TRÄGERLÄNGE [mm]

FÜLLEN

ABSAUGEN

BELADUNG [%]

120  110  100  90  80  70  60  50  40

0                                   152,4

*Fig. 4*

*Fig. 5*

**Fig. 6: WASHCOATLÄNGSVERTEILUNG**
(BEISPIEL 4)

TRÄGER:
LÄNGE: 160 mm
BREITE: 169,7 mm
HÖHE: 80,8 mm
ZELLDICHTE: 62 ZELLEN/cm$^2$
WANDSTÄRKE: 0,16 mm

GESAMTBELADUNG

BELADUNG [%]

TRÄGERLÄNGE [mm]

FÜLLEN

ABSAUGEN

EP 0 444 494 B1

Fig. 7

x̄ = DURCHSCHNITTLICHE WASHCOATAUFNAHME

R = STREUUNG DER INDIVIDUALWERTE

**Fig. 8**

x̄ = DURCHSCHNITTLICHE WASHCOATAUFNAHME

R = STREUUNG DER INDIVIDUALWERTE

CHARGE-NR.

EP 0 444 494 B1